# EUROPEAN PATENT APPLICATION

(11) **EP 4 726 073 A1**
(43) Date of publication of application: **15.04.2026**
(21) Application number: 24817472.4
(22) Date of filing: 24.04.2024
(51) Int. Cl.: C23C 24/04, B01J 31/28, B01J 35/39, B01J 35/51, B01J 37/02

(54) **RESIN MEMBER**

(30) Priority: 06.06.2023 JP 2023092849
(71) Applicant: Nissan Motor Co., Ltd., Yokohama-shi, Kanagawa 221-0023 (JP)
(72) Inventor: IZAWA, Yoshinori, Atsugi-shi, Kanagawa 243-0123 (JP); KOSEMURA, Tooru, Atsugi-shi, Kanagawa 243-0123 (JP)
(74) Representative: Grünecker Patent- und Rechtsanwälte PartG mbB
(86) International application number: PCT/JP2024/016063
(87) International publication number: WO 2024/252816

(57) **Abstract**

A resin part is provided with a photocatalytic coating on the surface of a resin base body.

The photocatalytic coating includes anatase type titanium dioxide particles and metal particles. The metal particles are stacked to shield the resin base body, and the anatase type titanium dioxide particles are dispersed among the metal particles. This makes it possible to provide a resin part provided with a photocatalytic coating that achieves both a high photocatalytic effect and prevention of deterioration of the resin base body.

## Description

### TECHNICAL FIELD

The present invention relates to a resin part, and more particularly, to a resin part having self-cleaning properties.

### BACKGROUND OF THE INVENTION

Titanium dioxide has a photocatalytic effect that exhibits an oxidizing action when exposed to light energy, and can oxidize and decompose an organic substance such as a contaminant and an odorous substance. In addition, it also exhibits antibacterial and antiviral effects, so by coating the surface of a part with titanium dioxide, it can impart self-cleaning properties that keep the surface of the part clean.

The photocatalytic effect of titanium dioxide is higher when the crystal structure thereof is anatase type than when it is rutile type. The anatase type titanium dioxide transforms into the rutile type titanium dioxide at temperatures exceeding 700° C, resulting in a decrease in the photocatalytic effect.

Patent Document 1 discloses a photocatalytic coating material in which titanium dioxide particles are enlarged by granulation, thereby reducing the transformation of titanium dioxide from anatase type to rutile type due to heat during thermal spraying and increasing the residual ratio of the anatase type titanium dioxide.

### RELATED ART LITERATURE

### Patent Literature

Patent Document 1 : Japan Patent No. 3,944,551

### SUMMARY OF THE INVENTION

### Technical Problem

What is disadvantage is as follows: in the photocatalytic coating material of the Patent Document 1, the transition of titanium dioxide to the rutile type is not sufficiently reduced, resulting in a low photocatalytic effect, and the oxidizing action of titanium dioxide deteriorates the resin base body.

The present invention has been made in consideration of the problems inherent in the conventional technology, and it is an objective of the present invention to provide a resin part provided with a photocatalytic coating that has a high photocatalytic effect on the surface and can prevent deterioration of the resin base body.

### Solution to Problem

As a result of extensive research into achieving the above-mentioned objective, the inventors discovered that the above-mentioned objective could be achieved by spraying anatase type titanium dioxide particles and metal particles in a non-molten state onto a resin base body by a cold spray method to shield the resin base body with the metal particles, and thus completed the present invention.

That is, according to the present invention, a resin part includes a photocatalytic coating on the surface of a resin base body.
The photocatalytic coating includes anatase type titanium dioxide particles and metal particles. The metal particles are stacked to shield the resin base body, and the anatase type titanium dioxide particles are dispersed among the metal particles.

A method for producing a resin part according to the present invention is a method for producing the resin part according to the above-mentioned present invention, and includes a coating step in which raw material particles in a non-molten state are sprayed onto the surface of the resin base body to form a photocatalytic coating.
The raw material particles include anatase type titanium dioxide particles and metal particles.
The coating step includes lowering the temperature of the raw material particles colliding with the resin base body to 100°C or more and 150°C or less.

### Advantageous Effect of the Invention

According to the present invention, anatase type titanium dioxide particles and metal particles are sprayed in a non-molten state onto a resin base body, and the resin base body is shielded by the metal particles, thereby making it possible to provide a resin part provided with a photocatalytic coating that achieves both a high photocatalytic effect and prevention of deterioration of the resin base body.

### BRIEF DESCRIPTION OF THE DRAWINGS

FIG. 1 is a cross-sectional view illustrating an example of the structure of the resin part according to the present invention.
FIG. 2 is a diagram illustrating examples of granulated particles granulated raw material particles.
FIG. 3 is a cross-sectional image of the resin part according to the present invention.

### DESCRIPTION OF EMBODIMENTS

### < Resin Part >

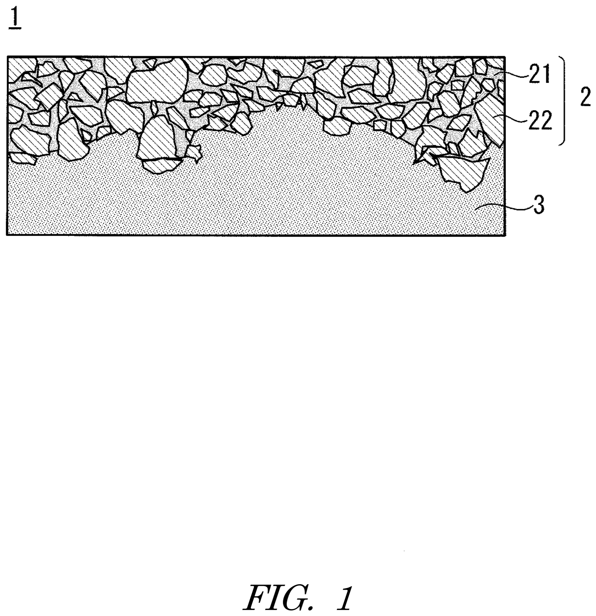

A resin part according to an embodiment of the present invention will be described in detail. According to an embodiment of the present invention, a resin part includes a photocatalytic coating on the surface of a resin base body. As illustrated in FIG. 1, this photocatalytic coating includes metal particles that are stacked to shield the resin base body, and anatase type titanium dioxide particles are dispersed between the metal particles stacked.

In embodiments of the present invention, shielding the resin base body with metal particles means that the metal particles are present on an optical path for the light incident on the resin part from all directions, and titanium dioxide, which transmits light, are not connected from the surface of the photocatalytic coating to the interface between the photocatalytic coating and the resin base body, so that the light does not reach the resin base body.

In other words, even if the photocatalytic coating includes a location at a certain depth thereof where the metal particles are discontinuous in the in-plane direction, the metal particles only need to be present somewhere in the out-of-plane direction ( at a different depth than above-mentioned ) from the above location and block the light, and the above shielding does not mean that the metal particles form a continuous layer in the in-plane direction at a certain depth.

Because the metal particles shield the resin base body from light in this manner, even if titanium dioxide particles are present near the interface between the photocatalytic coating and the resin base body, the titanium dioxide near this interface does not exhibit an oxidizing action, thereby preventing deterioration of the resin base body.

In a resin part of the present invention, the photocatalytic coating is formed by stacking the metal particles, and unlike a plating coating with dispersed titanium dioxide, even if photocatalytic coating peels off, the coating does not form edges, so the photocatalytic coating reduces the risk of injury even when used on areas that may be touched by hands and other parts.

The above photocatalytic coating can be formed by the cold spray method.
The cold spray method is a method for forming a coating by colliding raw material particles in a solid phase, that is while in a non-molten state, without melted or gasified, with a base body using a supersonic flow of a working gas.

According to the above-mentioned cold spray method, a photocatalytic coating can be formed at low temperatures and unlike other thermal spraying methods, it is unnecessary to heat the anatase type titanium dioxide particles higher than their transition temperature. This prevents the titanium dioxide particles from transforming from the anatase type to the rutile type and it is possible to provide a high photocatalytic effect.

The above photocatalytic coating includes the metal particles whose cross-sectional area percentage (%) to the cross-sectional area of the above photocatalytic coating is preferably more than 50% and 95% or less, and is more preferably 55% and more and 90% or less, and is even more preferably 60% or more and 80% or less, although it depends on the thickness of the photocatalytic coating.

By keeping the cross-sectional area percentage (%) of the metal particles within the above range, it is possible to prevent light from transmitting through to the vicinity of the resin base body while still achieving the photocatalytic effect of the titanium dioxide particles near the surface of the photocatalytic coating.
When the cross-sectional area percentage (%) of the metal particles is more than 95%, the amount of titanium dioxide particles decreases, resulting in a decrease in the photocatalytic action.
When the cross-sectional percentage (%) of the metal particles is 50% or less, the metal particles also serve as a binder, as described below, and the force of the coating may decrease.

Examples of the metal material constituting the metal particles, but are not limited to, a metal simple substance and an alloy.

The metal material has ductility and malleability and is capable of plastic deformation. The metal particles according to an embodiment of the present invention not only shield the resin base body from an incident light, but also serve as a binder that holds the titanium dioxide particles and forms a photocatalytic coating with high adhesive force.

The Vickers hardness of the metal material is preferably 700 (Hv) or less, and is more preferably 500 (Hv) or less, and is even more preferably 400 (Hv) or less.

When the metal particles are made of a metal material having a Vickers hardness of 700 (Hv) or less, the metal particles significantly plastically deform by the collisions in forming the coating by the cold spray method.

This plastic deformation of the metal particles results in high bonding and adhesive force, and the force of the coating can be improved, and it is possible to hold titanium dioxide particles that do not plastically deform, so the efficiency of coating formation can be improved.

In other words, the metal particles sprayed onto the resin base body by the cold spray method sink into the resin base body and plastically deform, and adhere tightly, forming irregular recesses and protrusions at the interface with the resin base body, which bond to the resin base body by an anchor effect. Furthermore, these metal particles receive and hold titanium dioxide particles collided later, and prevent rebounding.

According to the method for cold spraying raw material particles containing metal particles to form a coating, the metal particles plastically deform by the collisions and are metallurgically bonded together. Titanium dioxide particles are mechanically bonded to metal particles and the resin base body by the anchor effect, not by metallurgical bonding such as the formation and diffusion of an intermetallic compound.

There is no lower limit for the Vickers hardness of the metal material, but it has been confirmed that a coating can be formed even with metal particles having a Vickers hardness of 350 (Hv).

Examples of the metal simple substance include, but are not limited to, copper (Cu), aluminum (Al), nickel (Ni), chromium (Cr), iron (Fe), silver (Ag), titanium (Ti), zinc (Zn), and magnesium (Mg).

Furthermore, examples of the alloy include, but are not limited to, alloys containing 50 mass% or more of one metal selected from the group consisting of copper (Cu), aluminum (Al), nickel (Ni), chromium (Cr), iron (Fe), silver (Ag), titanium (Ti), zinc (Zn), and magnesium (Mg).

Among these, copper and silver have a bactericidal effect, so that metal simple substances such as copper and silver or an alloy containing 50 mass% or more of metal simple substances such as copper and silver can be preferably used as the metal material.

From the point of view of design, by using metal simple substances such as copper (Cu), aluminum (Al), nickel (Ni), chromium (Cr), and silver (Ag), it is possible to impart luster and gloss to the photocatalytic coating. By using simple substances such as iron (Fe) and titanium (Ti), it is possible to form a matte photocatalytic coating.

Furthermore, by changing the component ratio of the above alloys, for example, Cu-Zn and Cu-Ni-Zn, it is possible not only to improve the hardness and durability of the photocatalytic coating but also to change the color of the photocatalytic coating.

The color of the photocatalytic coating can also be changed by forming a colored layer on the surface of the metal particles. Examples of the colored layer include, but are not limited to, a plating coating, a chemical conversion coating, and an inorganic pigment coating.

Examples of the plating coating include, but are not limited to, nickel (Ni), nickel-phosphorus (Ni-P), copper (Cu), and zinc (Zn), and these plating coatings can be formed by electroless plating.

Examples of the chemical conversion coating include, but are not limited to: a phosphate coating formed by a phosphate coating treatment, such as a zinc phosphate coating, an iron phosphate coating, a manganese phosphate coating; a chromium oxide coating formed by a chromate treatment; and a triiron tetraoxide coating formed by a blackening treatment.

The inorganic pigment coating can be formed by embedding the inorganic pigment into the surface of metal particles using a high-speed airflow impact method or by spray coating using molten glass as a binder. Examples of the inorganic pigment include, but are not limited to, natural mineral pigments obtained from minerals or soil, and synthetic inorganic pigments such as a metal oxide.

The resin part according to an embodiment of the present invention can include a plating coating having defects on the photocatalytic coating. This allows the color of the surface of the resin part to be different from that of the photocatalytic coating, and allows the anatase type titanium dioxide particles of the photocatalytic coating to be exposed from the defects in the plating coating, so it is possible to exhibit a photocatalytic effect.

The above plating coating with the defects can be produced by connecting the photocatalytic coating to a DC power supply and forming the plating coating in a treatment solution.

According to the electrolytic plating method using a DC power supply, anatase type titanium dioxide particles do not have conductivity, so a plating coating is not formed on the anatase type titanium dioxide particles exposed on the surface of the photocatalytic coating. The plating coating is formed only on the portions of the surface of the photocatalytic coating that are formed with metal particles, so it is possible to expose anatase type titanium dioxide particles from defective portions of the plating coating.

Examples of the plating coating formed on the photocatalytic coating include, but are not limited to, metal plating coatings that can be electroplated, such as copper, nickel, chromium, gold, silver, and zinc.

The resin part according to an embodiment of the present invention can improve a tactile feeling by having a surface roughness (Ra) of 25 µm or less. When the surface roughness (Ra) thereof is in the range of 5 µm or more and 25 µm or less, a high-grade feeling by grained texture can be produced. When the surface roughness (Ra) thereof is less than 5 µm, it is possible to improve the metallic luster.

The average particle size of the metal particles is preferably 10 µm or more and 50 µm or less, and is more preferably 20 µm or more and 40 µm or less.
This improves the shielding properties and increases the kinetic energy of the metal particles during cold spraying, so the efficiency of coating formation can be improved.
Furthermore, when the thickness of the photocatalytic coating is about 100 µm, the metal particles with the particle size of greater than 50 µm tend to fall off easily during at least one of polishing and grinding. In addition, the metal particles with a large particle size like above reduce uniform dispersibility of titanium dioxide particles on the surface of the photocatalytic coating.

An example of the titanium dioxide particles is, but is not limited to, anatase type titanium dioxide particles having the average particle size of 0.01 µm or more and 2 µm or less.

Anatase type titanium dioxide particles carrying copper within the particles can be preferably used as the above titanium dioxide particles because such anatase type titanium dioxide particles exhibit a photocatalytic effect not only with ultraviolet light but also with visible light and can impart self-cleaning properties even indoors where there is little ultraviolet light.

An example of such titanium dioxide particles is, but is not limited to, TKP-103 manufactured by TAYCA corporation.

The resin part according to an embodiment of the present invention has self-cleaning properties, so it can be preferably used for automobile resin parts such as steering wheels and door handles that easily adhere sebum stains, as well as for resin parts for transport equipment, resin parts for electronic equipment, resin parts for home appliance, resin parts for office use, resin parts for house, medical and sanitary resin parts, etc.

### < Method for Producing Resin Part >

Next, a method for producing the above-mentioned resin part will be described in detail.
The method for producing a resin part according to an embodiment of the present invention includes a coating step of spraying raw material particles containing anatase type titanium dioxide particles and metal particles onto the surface of a resin base body by a cold spray method to form a photocatalytic coating.

As described above, the cold spray method is a method for forming a coating by colliding raw material particles in a solid phase with a base body using a supersonic flow of a working gas while the raw material particles are in a non-molten state, without melting or gasifying the raw material particles.

According to the cold spray method, metal particles in the raw material that collided at a supersonic speed plastically deform to form a coating, and unlike other thermal spraying methods, this method can minimize characteristic change of raw material particles due to heat and oxidation of raw material particles in the coating, so it is possible to prevent titanium dioxide particles from transforming from the anatase type to the rutile type.

Furthermore, the cold spray method uses a working gas at about 500°C or more and 600° C or less, which does not melt the raw material particles.

In a typical cold spray method for forming a coating on a metal base body, the nozzle spraying the raw material particles is brought close to the metal base body and the raw material particles collide with the metal base body in order to prevent a decrease in the temperature and kinetic energy of the raw material particles.

In an embodiment of the present invention, since a coating is formed on a resin base body, the distance between the nozzle for spraying raw material particles and the resin base body is increased to lower the temperature of the working gas less than the heat-resistant temperature of the resin base body.

Specifically, the temperature of the working gas sprayed at 500°C or more and 600°C or less is lowered to 100°C or more and 150°C or less and the raw material particles collide with the resin base body. This makes it possible to prevent deformation and deterioration of the resin base body due to the working gas.

The working gas expands and its temperature drops when it is sprayed from the nozzle. When the distance between the nozzle and the resin base body is too close, the temperature of the working gas does not drop sufficiently and the resin base body melts. Conversely, when the distance therebetween is too far, not only the working gas becomes too cold, but the speed of the raw material particles decreases and adherability of the raw material particles to the resin base body decreases, so the distance between the nozzle and the resin base body is preferably about 150 mm.

Both of a thermoplastic resin and a thermosetting resin can be used as the resin constituting the resin base body, with no specific restriction.

In particular, when the resin base body is a thermoplastic resin, the kinetic energy of the raw material particles is converted into thermal energy by the collision, and the thermoplastic resin in the area where the raw material particles collide melts locally and welds to the raw material particles collided, so it is possible to improve bonding strength between the resin base body and the photocatalytic coating together with the bonding due to the anchor effect.

The speed of the raw material particles that can be embedded into the resin base body by the cold spray method and can be bonded by the anchor effect is preferably 200 m/s or more and 500 m/s or less, although it depends on the hardness of the resin base body.

The raw material particles may be mixed particles of anatase type titanium dioxide particles and metal particles, but are preferably granulated particles with large particle size and formed by bonding anatase type titanium dioxide particles and metal particles together.

As described above, the titanium dioxide particles are fine powders with an average particle size of 0.01 µm or more and 2 µm or less, so, the titanium dioxide particles tend to aggregate and are difficult to transport, and can easily occur nozzle clogging.

Using the granulated particles with large particle size as the raw material particles conduces to preventing the nozzle clogging as well as increasing the kinetic energy of the raw material particles thereby improving the efficiency of forming the photocatalytic coating.

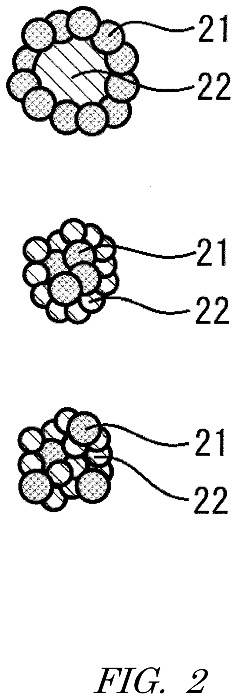

As illustrated in FIG. 2, the granulated particles may be formed by a metal particle as a core and the anatase type titanium dioxide particles that adhere to the periphery thereof. Conversely, the granulated particles may be formed by anatase type titanium dioxide particles as a core, and the metal particles that adhere to the periphery thereof. Furthermore, the granulated particles may be a mixture of anatase type titanium dioxide particles and metal particles, with no specific restriction.

The method for producing a resin part according to an embodiment of the present invention may include at least one of polishing and grinding the surface of the photocatalytic coating formed, after the coating step mentioned above.

As described above, titanium dioxide particles have smaller particle size than that of metal particles, so titanium dioxide particles are easily exposed on the surface of the photocatalytic coating. However, by at least one of polishing and grinding the surface of the photocatalytic coating, the anatase type titanium dioxide is uniformly exposed, so it is possible to provide a uniform photocatalytic effect.

Furthermore, by adjusting the surface roughness of the photocatalytic coating by at least one of polishing and grinding, it is possible to impart design such as gloss, matting, and grained texture, which improve a tactile feeling, as described above.

### EXAMPLES

The present invention will be described in more detail below with reference to an example, but the present invention is not limited to the following example.

### [Example 1]

Raw material particles made by mixing copper particles (Cu-HWQ-350 manufactured by FUKUDA METAL FOIL & POWDER Co., Ltd.) and anatase type titanium dioxide particles (JA-1 manufactured by TAYCA Corporation) in a mass ratio of 6:1 were sprayed onto the surface of a polypropylene resin base body by the cold spray method of the following conditions to form a photocatalytic coating, and the surface of the coating was ground with a brush to produce a resin part.

### Cold Spray Conditions

Apparatus: PCS-1000 (manufactured by Plasma Giken Co., Ltd.)
Working Gas: N2 gas, Spray Pressure 3 MPa, Spray Temperature 600°C
Distance from Nozzle to base body: 150 mm
(The temperature of the raw material particles when colliding with the resin base body is 100°C, and the collision speed of the raw material particles is 300 m/s.)

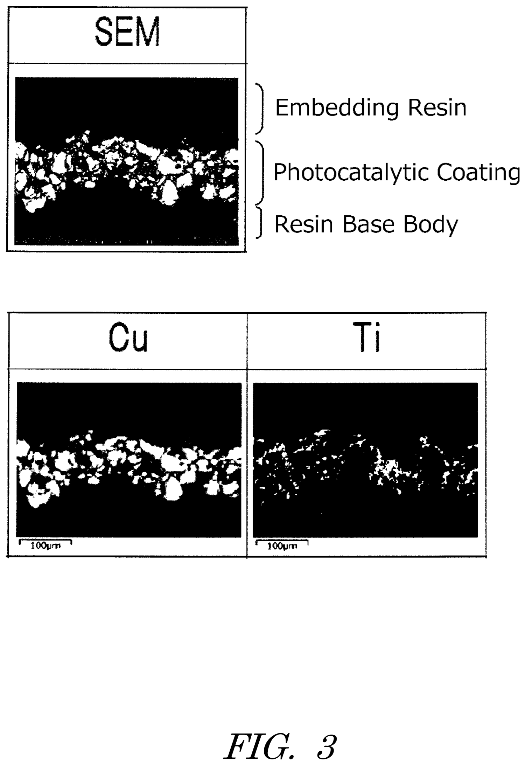

The cross section of the resin part produced was observed by energy dispersive X-ray spectroscopy (SEM-EDX), and elemental analysis of the photocatalytic coating was performed. The analysis result is illustrated in FIG. 3.

From FIG. 3, it can be seen that there is no portion where titaniums (Ti) are present continuously from the surface of the photocatalytic coating to the resin base body, and the resin base body is shielded by copper (Cu) particles, thereby preventing deterioration of the resin base body due to titanium dioxide.

### REFERENCE SIGNS LIST

- 1: resin part
- 2: photocatalytic coating
- 21: anatase type titanium dioxide particle
- 22: metal particle
- 3: resin base body

## Claims

1. A resin part comprising:
a photocatalytic coating on the surface of a resin base body,
wherein the photocatalytic coating includes anatase type titanium dioxide particles and metal particles,
the metal particles are stacked to shield the resin base body, and
the anatase type titanium dioxide particles are dispersed among the metal particles.

2. The resin part according to claim 1,
wherein the area percentage (%) of metal particles in the cross section of the photocatalytic coating is more than 50% and 95% or less.

3. The resin part according to claim 1,
wherein the metal particles have a Vickers hardness of 700 (Hv) or less.

4. The resin part according to claim 1,
wherein the resin base body and the photocatalytic coating are bonded together at least by an anchor effect.

5. The resin part according to claim 1,
wherein the photocatalytic coating has a surface roughness (Ra) of 25 µm or less.

6. The resin part according to claim 1,
wherein each of the metal particles has a colored layer on a surface of the each metal particles.

7. The resin part according to claim 6,
wherein the colored layer is a plating coating plated a metal selected from the group consisting of nickel (Ni), nickel-phosphorus (Ni-P), copper (Cu) and zinc (Zn).

8. The resin part according to claim 6,
wherein the colored layer is a chemical conversion coating selected from the group consisting of a phosphate coating, a chromium oxide coating, and triiron tetraoxide coating.

9. The resin part according to claim 6,
wherein the colored layer is an inorganic pigment coating containing an inorganic pigment.

10. The resin part according to claim 1,
further comprising a plating coating having defects on the photocatalytic coating, wherein the anatase titanium dioxide particles of the photocatalytic coating are exposed from the defects in the plating coating.

11. The resin part according to any one of claims 1 to 10,
which constitutes a resin part selected from the group consisting of automobile resin parts, resin parts for transport equipment, resin parts for electronic equipment, resin parts for home appliance, resin parts for office use, resin parts for house, and medical and sanitary resin parts.

12. A method for producing a resin according to any one of claims 1 to 11, comprising:
spraying raw material particles in a non-molten state onto the surface of the resin base body to form a photocatalytic coating,
wherein
the raw material particles include anatase type titanium dioxide particles and metal particles, and
spraying raw material particles in a non-molten state onto the surface of the resin base body to form a photocatalytic coating includes
lowering the temperature of the raw material particles colliding with the resin base body to 100°C or more and 150°C or less.

13. The method according to claim 12,
wherein
spraying raw material particles in a non-molten state onto the surface of the resin base body to form a photocatalytic coating includes
making the raw material particles collide with the resin base body at a speed of 200 m/s or more and 500 m/s or less.

14. The method according to claim 12,
further comprising
after spraying raw material particles in a non-molten state onto the surface of the resin base body to form a photocatalytic coating,
at least one of polishing and grinding the surface of the photocatalytic coating.

15. The method according to claim 12,
wherein the raw material particles are granulated particles comprising anatase type titanium dioxide particles and metal particles.

16. The method according to claim 15,
wherein each of the granulated particles includes a core comprising the metal particles, and the anatase type titanium dioxide particles adhere to the periphery of the core comprising the metal particles.

17. The method according to claim 15,
wherein each of the granulated particles includes a core comprising the anatase type titanium dioxide particles, and the metal particles adhere to the periphery of the core comprising the anatase type titanium dioxide particles.

18. The method according to claim 15,
wherein the granulated particles are mixed particles mixing anatase type titanium dioxide particles and metal particles.
